Europäisches Patentamt

European Patent Office

Office européen des brevets

(19)

(11) **EP 1 696 422 A2**

(12) **EUROPEAN PATENT APPLICATION**

(43) Date of publication:
**30.08.2006 Bulletin 2006/35**

(51) Int Cl.:
***G10L 15/18*** *(2006.01)*

(21) Application number: **06380037.9**

(22) Date of filing: **27.02.2006**

| | |
|---|---|
| (84) Designated Contracting States:<br>**AT BE BG CH CY CZ DE DK EE ES FI FR GB GR**<br>**HU IE IS IT LI LT LU LV MC NL PL PT RO SE SI**<br>**SK TR**<br>Designated Extension States:<br>**AL BA HR MK YU**<br><br>(30) Priority: **28.02.2005 ES 200500441**<br><br>(71) Applicant: **PROUS INSTITUTE FOR BIOMEDICAL**<br>**RESEARCH S.A.**<br>**08028 Barcelona (ES)** | (72) Inventors:<br>• **Prous Blancafort, Josep**<br>  **08021 Barcelona (ES)**<br>• **Balcells Capellades, Marti**<br>  **08012 Barcelona (ES)**<br><br>(74) Representative: **Curell Aguilà, Marcelino et al**<br>**Dr. Ing. M. Curell Sunol I.I. S.L.**<br>**Passeig de Gràcia, 65 bis**<br>**08008 Barcelona (ES)** |

(54) **Method for converting phonemes to written text and corresponding computer system and computer program**

(57)      Method for converting phonemes to written text and corresponding computer system and computer program. In languages having a low correspondence between sounds and letters, converting phonemes to letters is complex. The continual addition of neologisms, with an adapted pronunciation but with an original spelling makes the conversion even harder. The conversion based solely on phonetic dictionaries requires very extensive and permanently updated dictionaries. The method for converting phonemes to written text comprises:

[a] a stage of reading a finite sequence of phonemes to be converted which form a word to be converted,
[b] a stage of generating a plurality of possible words,
[c] a stage of choosing one of said possible words as the correct word.

So the problem is broken down into two steps and the most suitable strategy can be applied to each step.

**EP 1 696 422 A2**

**Description**

Field of the invention

The invention belongs to the automatic voice recognition sector, and in particular relates to a method for converting phonemes to written text, in other words, a method capable of generating an orthographic transcription (that is, a written text) from a phonetic transcription. The invention also relates to a computer system comprising an execution environment suitable for running a computer program comprising means for converting phonemes to written text suitable for carrying out a method according to the invention, and it also relates to a computer program that can be loaded directly into the internal memory of a computer and/or be stored in a medium suitable for being used by a computer that includes appropriate instructions for carrying out a method according to the invention.

State of the art

The problem of converting phonemes to written text has not received very much attention from the scientific community. Most voice recognition systems have solved the problem by using a phonetics dictionary containing the words and their respective phonetic transcriptions. Although the dictionaries used by these systems usually also contain proper names, surnames, place names, etc... they cannot guarantee, at least for general applications, containing all the words featured in the audio passage. It is therefore essential to provide these systems with an alternative system for when a word not featured in the dictionary appears. Most published articles concerning the conversion of phonemes to text are written by the research groups working on voice generation, in other words, the inverse problem, converting text to phonemes. Many of these are bidirectional systems and therefore, they can also be used for converting phonemes to text. These systems are divided into two large categories. Those systems working with standards to convert the input phonetic transcription to text, and those which try to infer the orthography of the phonetic transcription by searching for partial similarities with words included in a phonetic dictionary. The first group includes the work of Fisher [1] and Yannakoudakis and Hutton [2]. In the second group it is worth highlighting the works of Parfitt and Sharman [3] and Alleva and Lee [4], based on Markov's hidden models, the system by Lucas and Damper [5] based on neuronal networks or the method of pronunciation by analogy by Marchand and Damper [6]. In between these two strategic groups, there is the work by Meng [7], which uses a hierarchical structure to include morphological information. Generally, it is difficult to compare the performance of the various algorithms because each one has been verified using different dictionaries and therefore each system's error and recognition rate may have been distorted by the different content in each dictionary.

Summary of the invention

The aim of the invention is to overcome these drawbacks, in particular, its objective is to be able to generate an orthographic transcription for those words not featured in the phonetic dictionary. This aim is achieved by means of a method for converting phonemes to written text, characterised in that it includes:

[a] a stage of reading a finite sequence of phonemes to be converted which form a word to be converted,
[b] a stage of generating a plurality of possible words,
[c] a stage of selecting one of the possible words as the correct word.

In fact, in the problem of converting phonemes into text, it has been observed that the complexity depends largely on the language and the register for which the system is designed. In languages having a high level of correspondence between sounds and letters, such as Spanish for example, converting phonemes to text can be relatively easy, whereas in other languages having a low level of correspondence between sounds and letters, such as English or French, the task can become very difficult. Taking English as an example, it can be seen that one and the same phoneme can be written in several different ways, such as for example the sound /k/ is written with the letter c in "cat" but with the letter *k* in "kitten". On the other hand, one and the same set of letters can have different phonetic representations, such as for example the combination of letters *ough* is pronounced /ah f/ in "enough", but /ow/ in "though", /ao/ in "thought", and /aw/ in "plough". In addition to this, neologisms or words borrowed from other languages, particularly in technical sectors, are continually added to a language. Words which have maintained their original spelling although their pronunciation is adapted to the actual language pronunciation.

For this reason, an attempt to base the transcription solely on phonetic dictionaries is faced with the difficulty that very extensive and permanently updated dictionaries are required.

In this sense, the method according to the invention breaks the transcription down into two stages: a first stage in which the finite sequence of phonemes forming a word is transcribed in a sequence of letters (in fact a plurality of sequences of possible letters are produced), and a second stage which analyses which of the letter sequences is the correct one. Consequently it is possible to break the problem down into two steps and apply the most suitable strategy to each step. This way, when transcribing the phoneme sequence into a sequence of letters the language pronunciation rules can be taken into account and even written words not featured in a dictionary can be created. The method also allows generating a plurality of possible written words that, preferably, can be ordered by some criterion indicating the "goodness of fit" of each one, as will be described later on. The subsequent analysis stage enables the correct word (or that which shows greater probability of being correct) to be chosen out of the written words produced in the previous stage by applying, for example, orthographic rules, a dictionary enquiry and/or enquiries vis-à-vis any other type of language model. At any event, the method is capable of generating at least one written word even in the event that the subsequent analysis stage cannot confirm the goodness of fit of the written word.

The method of this invention is suitable for transcribing a sequence of phonemes into a sequence of letters, however, it requires that the input sequence (the sequence of phonemes) has the same quantity of elements as the output sequence. Since the correspondence between phonemes and letters is not one to one and, in fact, does not even maintain a constant proportion between phonemes and letters (as already shown in the previous section), it is necessary to group the phonemes in what we will call phonic groups and at the same time, group the letters in what we will call graphemes, so that the phonetic transcription or input sequence has the same number of elements (phonic groups) as the orthographic transcription or output sequence (made up of graphemes). More particularly, a phonic group is defined as a set of one of more phonemes corresponding to a grapheme. In turn, a grapheme is defined as a set of one or more letters corresponding to a phonic group.

The invention is also aimed at a computer system comprising an execution environment suitable for running a computer program characterised in that it comprises means for converting phonemes to written text suitable for carrying out a method according to the invention.

The invention is also aimed at a computer program that can be loaded directly into the internal memory of a computer characterised in that it comprises appropriate instructions for carrying out a method according to the invention.

Also the invention is aimed at a computer program stored in a medium suitable for being used by a computer characterised in that it comprises appropriate instructions for carrying out a method according to the invention.

Brief description of the drawings

Other advantages and characteristics of the invention can be appreciated from the following description, in which, non-limiting preferred embodiments of the invention are described, with reference to the accompanying drawings, in which:

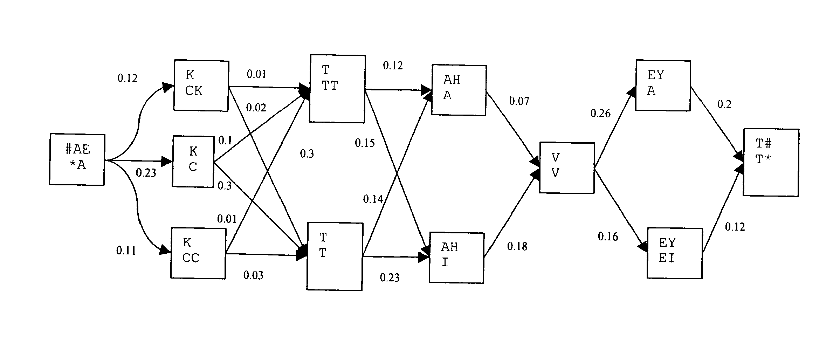

Fig. 1, a network for forming possible words.

Detailed description of embodiments of the invention

Some methods according to the invention are described below, for converting phonemes to text in which there is assigned to each phonic group forming a word all the possible graphemes thereof, in other words, all its possible orthographic representations, the total probability of each possible combination of graphemes that the set of phonemes it is desired to convert could represent is calculated, and, taking into account the probabilities calculated and a language model, the best combination of graphemes is chosen from among all the possible combinations. In particular, the method comprises the three stages [a], [b] and [c] indicated above:

[a] one stage of reading a finite sequence of phonemes to be converted forming a word to be converted,
[b] a stage of generating a plurality of possible words,
[c] a stage of selecting one of the possible words as the correct word.

Preferably, in the method according to the invention, stage [b] of generating a plurality of possible words includes, in turn:

[b1] a stage of adjudicating to each phonic group all possible graphemes associated with said phonic group,
[b2] a stage of forming all the possible words from the adjudications of stage [b1],
[b3] a stage of calculating the occurrence probability of a plurality of possible words from stage [b2] above.

The formation of all the words must not be understood in a strict sense, whereby a list is necessarily generated containing all possible words, but instead it is sufficient to consider or suggest all possible grapheme combinations, although in the end not all the possible combinations are made. Therefore, as can be seen in the example described below, one way of carrying out this stage is by suggesting a network of interconnections between all the possible phonemes, but without actually developing all the possible words, as there are methods, as will be mentioned below, whereby it is not necessary to develop all the words systematically, since instead the words having a higher occurrency probability can be developed in an orderly manner first of all, so that the word development can be interrupted when a certain value of occurrency probability is reached, or when a certain amount of developed words is reached, without having to develop the remaining words, that would have an smaller occurrency value. This is possible, for example, by using the Viterbi algorithm [8] for forming the possible words and calculating their occurrency probability. Therefore, in this case it must be understood that the word "formation" actually means "suggestion" or "definition".

Also, for the same reason it is indicated in the following stage that the probability of a plurality of possible words is calculated, but not necessarily of all the words since the probability of all the words will not always be calculated if, for example, the above-mentioned Viterbi algorithm is used.

On the other hand, if there is one single possible word, it must be understood that, on an exceptional basis, the term "plurality" also includes this case in which really a single occurrency probability will be calculated.

Advantageously stage [c] of choosing one of said possible words as the correct word comprises, in turn:

[c1] a stage of selecting the possible words of stage [b3] according to their calculated occurrency probability, forming a subgroup comprising the words having a higher occurrency probability.

In fact, as already mentioned, an alternative is to obtain all the possible words so as to take them all into account when selecting the correct word. However, the quantity of possible words generated may be very high and/or the stage of choosing the correct word may be more or less cumbersome according to the quantity of possible words generated, and therefore it may be advisable to limit in some way the quantity of possible words to be processed. The fact that the occurrency probability is calculated allows this occurrency probability to be used as a filtering tool, so that only the possible words having a higher occurrency probability are generated, forming said subgroup. In this way, the stage of generating possible words is speeded up and, surely, also the stage of choosing the correct word. This can be done is a particularly efficient way using the said Viterbi algorithm, which allows the possible words to be generated in descending order of occurrency probability, whereby it is possible to form said subgroup so that it contains the possible words having higher occurrency probability.

Generally, in this description and claims the stages have been described following a particular order. However, it must be understood that this order is simply an explanatory order and must not necessarily be the time sequence of the various stages, in other words, the method of the invention can carry out the stages in any other time sequence that is compatible with the concept of the invention. It is also possible that two or more stages are carried out totally or partially in parallel. It must be understood that the claims cover any of these possibilities. So, for example, in the case of the section above, in using the Viterbi algorithm, stages [b2], [b3] and partially [c1] (insofar as the formation of the subgroup is concerned) are carried out simultaneously.

Preferably the subgroup is made up of a maximum of 500 possible words having a higher occurrency probability, and very preferably a maximum of 100 possible words having a higher occurrency probability. In fact, these values have proved to be a good balance between the complexity of the necessary system (owing to technical requirements, such as for example processing speed) and the quality of the result obtained. On the other hand, it is advantageous that the subgroup has at least 10 possible words, logically whenever the group of all possible words has more than 10 possible words. Otherwise the risk of disregarding the possible word that would finally be the correct one is too high and it is not possible to obtain goods results using the method.

Advantageously stage [c] of choosing one of the possible words as the correct word comprises, in addition:

[c2] a stage of searching for the possible words of the subgroup of stage [c1] above in a language model.

In fact, once the possible words have been formed the one that is the correct one must be chosen. Advantageously a language model is used which can be, for example, orthographic rules or a conventional dictionary, and the correct word can be taken to be the one having the highest occurrency probability and is correct according to the language model, in other words, the one that complies with the orthographic rules and/or which features in the conventional dictionary. But preferably the language model is a first order model, in other words, a dictionary including, for example, the frequency with which each word is used (linguistic probability). It is possible to perfect the system even further by using a second order language model, in other words, a dictionary which takes into consideration the frequency with which each word is used according to the previous word. In these last two cases (first and second order language models) the way of choosing the correct word is different: the linguistic probability of all the possible words in the subset (or complete set) of possible words and the possible word having a greater linguistic probability is selected as the correct word. In other words, the word finally chosen is selected according to the linguistic probability whereas the occurrency probability is only used to form the subset (when using the variant method that foresees forming said subset). As can be seen, this way of choosing the correct word can be applied to the subset of possible words or to the complete set of possible words. Choosing between the two alternatives is again a question of balance between the technical complexity of the computer system used and the quality of the result obtained.

The method according to the invention makes it possible to resolve in a particularly advantageous way the situation where none of the possible words searched in the language model is found: the possible word having the greater calculated occurrency probability is chosen. In fact, since there are two parameters for determining the "goodness of fit" of a possible word (its occurrency probability and its linguistic probability), if the more determining parameter fails (the linguistic probability) there is still the other parameter (the occurrency probability) for making the choice. The system is, therefore, very autonomous and can handle text transcriptions with new and/or unknown words, with satisfactory results.

Preferably the calculation of the occurrency probabilities of each possible word takes into account the value of the transition probabilities between pairs of phonic group-grapheme correspondencies forming said possible word.

In order to convert a phonetic transcription to text, preferably first all the possible combinations of graphemes (or at least a plurality of them) are produced, with which said phonetic transcription can be written. For this process the phonic group-grapheme correspondencies that may have been entered manually in their entirety or, preferably, may have been found during a training stage, are taken into account. This stage produces a large network of nodes linked together (see Fig. 1), with each node representing a phonic group-grapheme correspondency and where the links between the nodes represent the transition between each pair of phonic group-grapheme correspondencies and a transition probability is assigned to them. Once the network is built, the most probable orthographic representations N for that particular phonetic description are calculated in order (from higher to lower), producing a list of possible words where the first position is taken up by the most probable representation. Once the list has been compiled, it is re-ordered using a first order language model (although greater order models could also be used). In other words, the words in the list that are more frequent in the language of the language model take up the first positions in front of other words which, initially, do not have any meaning or contain orthographic errors. Alternatively, as already mentioned, and according to the language model chosen, it may be sufficient to chose the most probable word that can be validated by the dictionary or the orthographic rules.

It is considered that each word is formed jointly by its phonetic representation and its orthographic representation. Each of these representations in turn is made up of a sequence of symbols. If the phonetic transcription of a word s is defined as $\phi(s) = p_1 p_2 \text{ K } p_m$ and its orthography as $\omega(s) = l_1 l_2 \text{ K } l_m$, where $p_i$ are phonemes and $l_i$ are letters, the two representations can be aligned by grouping the phonemes in phonic groups $f_i$ and the letters in graphemes $g_i$ so that the new phonetic representation $\phi(s) = f_1 f_2 \text{ K } f_n$ and the new orthographic representation $\omega(s) = g_1 g_2 \text{ K } g_n$ have the same number of symbols and there is a one-to-one correspondence between them. Then the word s can be represented jointly with the phonetic transcription and its orthographic representation using the new symbols formed by correspondencies between phonic groups and graphemes. If the new representation is defined as $y(s) = c_1 c_2 \text{ K } c_n$ where $c_i = < f, g >_i$ represents a correspondency between a phonic group f and a grapheme g, then the combined probability can be associated to the word s

$$P\big(\gamma(s)\big) = P\big(c_1 c_2 \text{ K } c_n\big) = P(c_1) \times P(c_2 \mid c_1) \times P(c_3 \mid c_1 c_2) \times \text{K} \times P(c_n \mid c_1 \text{ K } c_{n-1}).$$

Assuming that the representation $c_1 c_2 \text{ K } c_n$ is a Markov chain, the expression is simplified to:

$$P\big(\gamma(s)\big) = P(c_1) \times \prod_{i=2}^{n} P(c_i \mid c_{i-1})$$

Then going from the phonetic representation to the orthographic representation is equivalent to finding the sequence of graphemes $g_{1n}$ * that, given the sequence of phonic groups $f_{1n}$, maximizes the combined probability $P(\gamma(s))$. Formally it can be expressed as follows:

$$g_{1n} * = \arg\max P\big(\gamma(s) \mid f_{1n}\big)$$

In theory $P(\gamma(s)|f_{1n})$ ought to be the sum of all the possible alignments of phonic groups and graphemes which would result in the same word $s$, but in practice, in order to simplify the search process, only the alignment having maximum probability is considered. In fact, once the network of nodes is built, there may be two different routes (therefore with different symbols) leading to the same orthographic transcription. For example, if we consider the English word "talk" and its phonemes T AO K, a possible network route could be T-t , AO-a, K -lk, and another route could be T-t, AO-al, K-k. They are two different routes leading to the same solution: "talk". If the first route had the probability 0.32 and the second one the probability 0.15, the real probability of the transcription of "talk" would be the sum of these two probabilities, in other words, 0.47. Then, in order to calculate the total probability of an orthographic transcription, the probabilities of all the possible orthographic transcriptions produced in the node network would have to be calculated, and therefore there would be no sense in using the Viterbi algorithm which allows probabilities to be obtained in a orderly way, because they would all have to be calculated anyway. In order to avoid the computational cost this would imply, it is preferable to make an approximation and assume that the probability of a certain orthographic transcription (for example "talk") is the probability of the most probable orthographic transcription. In other words, in the above example, it would be assumed that the probability of the word "talk" would be 0.32 instead of 0.47. Generally the results are not significantly affected by this approximation.

In order to produce text from the phonetic transcription, it is advantageous that the system carries out beforehand a training or learning stage in order to learn, from a list of examples (the training set), the implicit relationships existing between the two representations (phonic groups and graphemes). Once the system has been trained, it can produce the text version of any phonetic transcription, even if this transcription is not included in the training set.

Preferably the training stage consists of three stages. In the first stage (stage [d1]) all the correspondencies existing between phonemes or groups of phonemes (phonic groups) and letters or groups of letters (graphemes) in the training set are determined, so that each word has the same number of phonic groups and graphemes and so that each phonic group has at least one correspondency with a grapheme. Therefore correspondencies can exist between more than one letter and a single phoneme and vice versa, as mentioned earlier. Once these basic correspondencies have been found, they are ordered automatically in order of priority (stage [d2]) and they are used to align each word in the training set symbol to symbol (stage [d3]), that is, each grapheme with its corresponding phonic group. The order of priority means that "double" graphemes must be given priority over single graphemes when the two alignments are possible in a word. In fact, if the alignment of the words in the training set is established without any priority, some incorrect alignments can be produced, particularly in the case of double letters. For example the word ABERRANT can be aligned as follows: *A B ER R A N T* - #AE B EH R AH N T# instead of *A B E RR A N T* - #AE B EH R AH N T# (in the first case the grapheme ER is associated to the phonic group EH and the grapheme R is associated to the phonic group R, whereas in the second case, the grapheme E is associated to the phonic group EH and the grapheme RR is associated to the phonic group R). Therefore it is advantageous to establish an order of priority that chooses the "double" graphemes instead of the single ones when both alignments are possible in a word. Once all the words are aligned, the transition probabilities between phonic group-grapheme pairs are estimated (stage [d4]) and these probabilities are the ones that will be used later to convert the phonetic transcription to text.

A phonetic dictionary is used to train the system. This dictionary contains each word with its respective phonetic transcription. However, generally, a phonetic dictionary will not specify which letter or group of letters corresponds to each phoneme or phonic group. This process is preferably carried out as follows:

- first the system is provided with a list of the most typical graphemes representing each phoneme (stage [d11]),
- with these correspondencies, the system tries to segment each word in the training set so that the phonetic representation and the grapheme representation have the same number of symbols. If it finds a word that cannot be segmented with the existing correspondencies, it asks the user to enter a new phonic group-grapheme correspondency (stages [d12] and [d13]). And so on until a list is compiled of all the possible phonic group-grapheme correspondencies featured in the training set,
- once this list has been achieved, the system re-aligns all the words but this time it does so taking into account all the correspondencies found in the training set and not only the ones provided as input (stage [d13] mentioned above). Preferably the alignment process is recursive and uses the Viterbi algorithm [8].

Once the dictionary has been obtained with the graphemes and phonic groups duly aligned, the transition probabilities of one correspondency to another must be estimated, $P(c_i|c_{i-1}) = P(<f,g>_i|<f,g>_{i-1})$. The simplest way to do it would be to count the number of times that the transition $c_{i-1}c_i$ occurs, and divide it by the number of times that $c_{i-1}$ occurs. That is,

$$P\!\left(c_i \mid c_{i-1}\right) = \frac{\left|c_{i-1}c_i\right|}{\left|c_{i-1}\right|}$$

This approximation is valid if the training set is large enough and contains various operations of all possible observations. However, in most cases it is difficult to have large training sets which allow a good estimation of the transition probabilities. For example, the fact that the sequence $c_x c_y$ does not occur in the training set does not imply that said sequence cannot be found in a real environment. Therefore it is advantageous to find a method that also allows the probabilities of the sequences not included in the training set to be estimated. And this is achieved preferably by interpolating (in this specification and claims, it must be understood that the term interpolate refers to the combination of a major order model with a minor order model to estimate a value that does not exist, as is usual in this technical sector) the estimates of $P(c_i \mid c_{i-1})$ with smaller order estimates:

$$P\!\left(c_i \mid c_{i-1}\right) = \frac{\max\!\left\{\left|c_{i-1}c_i\right| - D, 0\right\}}{\left|c_{i-1}\right|} + \lambda(c_{i-1})P(c_i)$$

This formula is valid for all the two symbol sequences, whether they have appeared 1, 2 or more times in the training set or whether they have not appeared in the training set. In other words, after recalculation (which is usually called smoothing), all the probabilities estimated with the "traditional" method will have changed to their "smoothed" value and at the same time, a value will also have been assigned to the sequences not appearing in the training set. The new value, in both cases, is the result of calculating the above formula. It must be noted that D is a constant having the same value for all the probabilities to be smoothed.

It can be seen that the first term is the transition frequency of $c_{i-1}$ to $c_i$ in the training set, but with a discount factor D :

$$D = \frac{N_1(c_{i-1}c_i)}{N_1(c_{i-1}c_i) + 2N_2(c_{i-1}c_i)}$$

Where $N_1(c_{i-1}c_i)$ is defined as the number of sequences $c_{i-1}c_i$ occurring exactly once in the training set, and $N_2(c_{i-1}c_i)$ is defined as the number of sequences $c_{i-1}c_i$ occurring exactly twice. The aim of this discount factor is to try and balance the estimate of the probabilities by reducing the weight of the transitions that occurred infrequently in the training set in order to redistribute said weight between the transitions that did not appear, assuming that their probabilities will be similar. Preferably, the value D is that indicated above, however it is possible to define other D values which can also produce satisfactory results.

In turn, $P(c_i)$ is defined as the coefficient between the number of different $c_{i-1}$ preceding $c_i$ and the total number of different sequences $c_{i-1}c_i$ found in the training set. Formally,

$$P(c_i) = \frac{N_{1+}(\bullet c_i)}{N_{1+}(\bullet\bullet)}$$

Where $N_{1+}(\bullet c_i)=|\{c_{i-1}:|c_{i-1}c_i|>0\}|$ and $N_{1+}(\bullet\bullet)$ is defined equivalently. That is, $N_{1+}(\bullet c_i)$ is the total number of different correspondencies preceding the correspondence $c_i$ in the training set and $N_{1+}(\bullet\bullet)$ is the total number of different combinations $c_{i-1}c_i$ appearing in the training set. In order that the probabilities continue to increase, 1, $\lambda(c_{i-1})$ must be defined as:

$$\lambda(c_{i-1}) = \frac{D}{|c_{i-1}|} N_{1+}(c_{i-1}\bullet)$$

Once the transition probabilities have been estimated, the system is ready to convert a sequence of phonemes to text. For each phoneme or group of phonemes, the system searches all possible correspondencies in graphemes and produces a network of nodes or a network for forming possible words (also called graph) with all the possible combinations of correspondencies. In this graph each node represents a phonic group-grapheme correspondency and each link between two nodes has an associated transition probability. Once the graph has been created it is possible to search for the most probable N combinations, from large to small, using the Viterbi algorithm [8] and the transition probabilities that were calculated in the training stage. In the resulting list, the most probable sequences take up the first positions and the less probable ones take up the last positions. However, it may be that the first sequences in the list do not correspond to real words, which in principle form the starting space. Then we can apply a language model to filter the best results. The information contained in the language model depends on the order of the model. A first order model will contain the probabilities of each word in English. A second order model, as well as the probabilities of each word on its own, will also contain the transition probabilities of one word to another. If using a first order model, the final result of converting phonemes to text will be produced by choosing the most probable sequence in English from all the grapheme sequences in the list.

As it can be seen, the system can make the conversion completely without a dictionary and it can even have selection criteria for choosing the most suitable word from among a plurality of possible words, for example using probabilistic criteria. The only reason the dictionary or language model is used is to consult whether words already written with letters in the previous stage actually exist (and, if they do, determine their linguistic probability). This way, by combining both stages, a very robust system is obtained, since it can always produce a transcription in written text combined simultaneously with the quality that can be guaranteed because, in practice, most written words have been confirmed as correct by their presence in the dictionary or language model.

Examples:

Example 1: Training

A training set or dictionary is used to train the system. For example, supposing a training set in the English language:

```
*ACTIGALL* #AE K T IX G AO L#
*ACTIN* #AE K T AX N#
*ACTING* #AE K T IX NG#
*ACTINIDE* #AE K T IX N AY D#
*ACTINIDIA* #AE K T IX N IH DX IY AX#
*ACTION* #AE K SH AX N#
*ACTIONABLE* #AE K SH AX N AX B AX L#
*ACTIONS* #AE K SH AX N Z#
*ACTIVASE* #AE K T IX V EY Z#
*ACTIVATE* #AE K T AX V EY T#
*ACTIVATED* #AE K T AX V EY DX AX D#
*ACTIVATES* #AE K T AX V EY T S#
*ACTIVATION* #AE K T AX V EY SH AX N#
*ACTIVATOR* #AE K T AX V EY DX AXR#
*ACTIVE* #AE K T IX V#
```

The training set does not show the correspondency between phonemes and letters. Therefore I it is necessary to carry out an alignment stage between the orthographic representation and the phonetic representation. So that the system can perform this alignment, it must be provided with an initial set of possible correspondencies between phonemes and letters. For example:

AE-A, AA-A, AH-A, EY-A, AO-O, EH-E, ER-ER, B-B, K-C, K-CK, K-CC, S-S, D-D,

JH-G, T-T, T-TT, IY-I, IH-I, IY-I, F-F, V-V, G-G, HH-H, IX-I, DX-D, L-LL ...

Where the first symbol of each pair represents a phoneme or phonic group and the second symbol represents a grapheme or letter. After a process aided by the user where new correspondencies between phonic groups and phonemes are found, the words contained in the training set or dictionary are aligned:

```
*ACTIGALL* #AE K T IH G AO L#
*A C T I N* #AE K T AH N#
*A C T I N G* #AE K T IH NG#
*A C T I N I DE* #AE K T IH N AY D#
*A C T I N I D I A* #AE K T IH N IH D IY AH#
*A C T I ON* #AE K SH AH N#
*A C T I ON A B LE* #AE K SH AH N AH B AHL#
*A C T I ON S* #AE K SH AH N Z#
*ACTIVASE* #AE K T IH V EY Z#
*A C T I V A TE* #AE K T AH V EY T#
*A C T I V A T E D* #AE K T AH V EY T AH D#
*A C T I V A T ES* #AE K T AH V EY T S#
*A C T I V A T I ON* #AE K T AH V EY SH AH N#
*A C T I V A T OR* #AE K T AH V EY T ER#
*A C T I V E* #AE K T IH V#
```

Then the transition probabilities between pairs of phonic groups and graphemes are calculated:

| | |
|---|---|
| EH-E N-N | 0.157495 |
| EH-E N-NH | 0.000142015 |
| EH-E N-NN | 0.0161897 |
| EH-E N-NNE | 0.000426046 |
| EH-E NG-N | 0.00710076 |
| EH-E NG-NG | 0.00134914 |

Example 2: Transcription of a phonetic sequence:

Once the transition probabilities have been obtained, it is possible to produce the orthographic representation of any phonetic transcription. If, for example, it is desired to obtain the orthographic representation of the phonetic transcription:
#AE K T AH V EY T#
then the system generates a network with all the possible orthographic representations of the word, where each node represents a phonic group-grapheme correspondency and where each transition has an associated probability. Figure 1 shows a network example.

Once the network is produced, the 500 most probable possible transcriptions are obtained:
#AE K T AH V EY T#

| | |
|---|---|
| *ACTOVATE* | 2.91072e-010 |
| *ACTAVATE* | 1.51033e-010 |
| *ACTEVATE* | 1.01975e-010 |
| *ACTIVATE* | 9.86199e-011 |
| *ACHTOVATE* | 7.92504e-012 |
| *ACTOVET* | 5.88882e-012 |
| *ACTOVAIT* | 5.69468e-012 |
| *ACKTOVATE* | 4.15065e-012 |
| *ACHTAVATE* | 4.11218e-012 |
| *ACTOVAITE* | 3.06638e-012 |
| *ACTAVET* | 3.05562e-012 |
| *ACTAVAIT* | 2.95488e-012 |

......

then all these possible words are searched in the language model, which in this example is a first order language model, in other words, a dictionary including the appearance frequency percentage of each word. Finally, the possible word is chosen that has the highest probability according to the language model and it is considered to be the correct word. In this example this would be:
*ACTIVATE*

If none of the possible words produced is found in the language model, the correct word is selected as the one having the highest transition probability, which in this example would be:
*ACTOVATE*

References

[1] W.M. Fisher. "A Statistical text-to-phone Function Using Ngrams and Rules", ICASSP 1999, pp. 649-652.

[2] E.J. Yannakoudakis, and P.J. Hutton. "Generation of spelling rules from phonemes and their implications for large dictionary speech recognition", in Speech Communication, vol. 10, pp.381-394, 1991.

[3] S.H. Parfitt and R.A. Sharman. "A bidirectionnal model of English pronunciation". In Proceedings of the European Conference on Speech Communication and Technology (Euro-speech) , volume 2, pages 801--804, September 1991.

[4] Alleva, F., Lee, K.F. "Automatic new word acquisition: spelling from acoustics". Proceedings of the DARPA Speech and Natural Language Workshop, pp. 266-270, October 1989.

[5] S.M. Lucas and R. I. Damper. "Syntactic neural networks for bi-directional text-phonetic translation", in Talking Machines: Theories, Models and Designs. Elsevier Science Publishers.

[6] Y. Marchand and R. Damper. "A Multi-Strategy Approach to Improving Pronunciation by Analogy", in Computational Linguistics, vol. 26, un. 2, pp. 195-219, 2000.

[7] H. Meng. "A hierarchical representation for bi-directional spelling-to-pronunciation/pronunciation-to-spelling generation", Speech Communication 2000, no. 33, pp. 213-239.

[8] Viterbi, A.J. "Error bounds for convolutional codes and an asymptotically optimum decoding algorithm", in IEEE Transactions on Information Theory IT-13(2), 260-269, 1967.

**Claims**

1. Method for converting phonemes to written text, **characterised in that** it comprises:

    [a] a stage of reading a finite sequence of phonemes forming a word to be converted,
    [b] a stage of generating a plurality of possible words,
    [c] a stage of choosing one of said possible words as the correct word.

2. Method according to claim 1, **characterised in that** said stage [b] of generating a plurality of possible words comprises, in turn:

    [b1] a stage of adjudicating to each phonic group all the possible graphemes associated with said phonic group,
    [b2] a stage of forming all the possible words from the adjudications in stage [b1],
    [b3] a stage of calculating the occurrency probability of a plurality of the possible words in stage [b2] above.

3. Method according to claim 2, **characterised in that** said stage [c] of choosing one of said possible words as the correct word comprises, in turn:

[c1] a stage of selecting the possible words from stage [b3] according to their calculated occurrency probability, forming a subgroup comprising the words having a higher occurrency probability.

4. Method according to claim 3, **characterised in that** said subgroup is made up of a maximum of 500 possible words having a higher occurrency probability, and preferably of a maximum of 100 possible words having a higher occurrency probability.

5. Method according to one of the claims 3 or 4, **characterised in that** said stage [c] of choosing one of said possible words as the correct word comprises, in addition:

[c2] a stage of searching for said possible words in said subgroup from stage [c1] above, in a language model.

6. Method according to one of the claims 1 or 2, **characterised in that** said stage [c] of choosing one of said possible words as the correct word comprises:

[c1'] a stage of searching for said possible words from stage [b] above in a language model.

7. Method according to one of the claims 5 or 6, **characterised in that** said language model is a first order model.

8. Method according to one of the claims 5 or 6, **characterised in that** said language model is a second order model.

9. Method according to any of the claims 2 to 8, **characterised in that** if none of the possible words searched in said language model is found, the possible word having the greatest calculated occurrency probability is chosen.

10. Method according to any of the claims 2 to 9, **characterised in that** said calculation of the occurrency probabilities of each possible word takes into account the value of the transition probabilities between phonic group-grapheme correspondencies.

11. Method according to any of the claims 1 to 10, **characterised in that** it comprises a learning stage comprising, in turn, the following stages:

[d1] determining all the existing phonic group-grapheme correspondencies between the phonemes and the letters of a particular training set,
[d2] putting said correspondencies in order of priority,
[d3] aligning each phonic group in the training set with its corresponding grapheme,
[d4] calculating the transition probabilities between each pair of phonic group-graphemes.

12. Method according to claim 11, **characterised in that** said stage [d1] comprises the following substages:

[d11] entering a first group of the most typical phonic group-grapheme pairs,
[d12] segmenting each word in the training set and detecting words that have not been able to be segmented because they contain phonic group-grapheme pairs not included in said first group,
[d13] entering the phonic group-grapheme pairs needed to be able to complete the segmentation of the substage [d12] so that said first group is complete with all the phonic group-grapheme pairs included in said training set.

13. Method according to one of the claims 11 or 12, **characterised in that** said alignment process is recursive and uses the Viterbi algorithm.

14. Method according to any of the claims 11 to 13, **characterised in that** said stage [d4] also calculates the transition probabilities of phonic group-grapheme pairs not included in the training set.

15. Method according to claim 14, **characterised in that** said calculation of the transition probabilities of phonic group-grapheme pairs not included in the training set is carried out by interpolating the transition probabilities of phonic group-grapheme pairs not included in the training set $P(c_i | c_{i-1})$ with the minor order transition probabilities of phonic group-grapheme pairs that are included in the training set, using the formula:

$$P\left(c_i \mid c_{i-1}\right) = \frac{\max\left\{\left|c_{i-1}c_i\right| - D, 0\right\}}{\left|c_{i-1}\right|} + \lambda(c_{i-1})P(c_i)$$

where:

- the first term in the numerator is the total number of transitions $c_{i-1}$ a $c_i$ in the training set from which a discount factor D is subtracted, calculated by means of the following formula:

$$D = \frac{N_1(c_{i-1}c_i)}{N_1(c_{i-1}c_i) + 2N_2(c_{i-1}c_i)}$$

where $N_1(c_{i-1}c_i)$ is the number of sequences $c_{i-1}c_i$ occurring exactly once in the training set, and $N_2(c_{i-1}c_i)$ is the number of sequences $c_{i-1}c_i$ occurring exactly twice,

- $P(c_i)$ is the coefficient between the number of different $c_{i-1}$ preceding $c_i$ and the total number of different sequences $c_{i-1}c_i$ found in the training set, which is calculated with the formula:

$$P(c_i) = \frac{N_{1+}(\bullet c_i)}{N_{1+}(\bullet\bullet)}$$

where $N_{1+}(\bullet c_i)$ is the total number of different correspondencies preceding the correspondency $c_i$ in the training set, that is, it is defined as $N_{1+}(\bullet c_i) = \left|\{c_{i-1} : \left|c_{i-1}c_i\right| > 0\}\right|$ and $N_{1+}(\bullet\bullet)$ is the total number of different combinations $c_{i-1}c_i$ appearing in the training set,

- $\lambda(c_{i-1})$ is calculated using the formula:

$$\lambda(c_{i-1}) = \frac{D}{\left|c_{i-1}\right|} N_{1+}(c_{i-1}\bullet)$$

16. Computer system comprising an execution environment suitable for running a computer program **characterised in that** it comprises means for converting phonemes to written text, which are suitable for carrying out a method according to at least one of the claims 1 to 15.

17. Computer program that can be loaded directly into the internal memory of a computer **characterised in that** it comprises appropriate instructions for carrying out a method according to at least one of the claims 1 to 15.

18. Computer program stored in a medium suitable for being used by a computer **characterised in that** it comprises appropriate instructions for carrying out a method according to at least one of the claims 1 to 15.